(19) Europäisches Patentamt
European Patent Office
Office européen des brevets

(11) **EP 0 984 273 A2**

## (12) EUROPEAN PATENT APPLICATION

(43) Date of publication:
08.03.2000 Bulletin 2000/10

(51) Int. Cl.7: **G01N 25/00**, G01N 19/00
// G01N3/18

(21) Application number: 99116677.8

(22) Date of filing: 26.08.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **04.09.1998 IT MI981967**

(71) Applicant:
**Politecnico Di Milano**
**Dipartimento Di Ingegneria Nucleare**
**20133 Milano (IT)**

(72) Inventors:
• **Luzzi, Lelio**
**20133 Milano (IT)**
• **Beghi, Marco Giuseppe**
**20133 Milano (IT)**

(74) Representative: **Cicogna, Franco**
**Ufficio Internazionale Brevetti**
**Dott.Prof. Franco Cicogna**
**Via Visconti di Modrone, 14/A**
**20122 Milano (IT)**

(54) **Device for measuring thermophysical properties of solid materials and method therefor**

(57)     The invention relates to a device for measuring thermophysical properties of solid materials, associated with a pressing test apparatus, subjecting the material to be measured to one or more stressing cycles, and comprising centering means for providing a uniaxial and even stress through the sample, supporting and restraining means, inside the sample, for controlling temperature variations generated by a thermoelastic effect, thermostatic means associated with the sample, and sample temperature sensing means, to exploit the thermomechanical relationship between the straining fields and the temperature fields in order to determine one or more thermophysical parameters and/or relationships therebetween. The present invention relates, moreover, to a measurement method for measuring thermophysical properties in solid materials, comprising the step of subjecting a sample to a mechanical stress in order to provide an efficient thermal power source, the thermal power thereof is generate due to a thermoelastic effect, which can be used for determining one or more thermophysical parameters and/or relationship therebetween.

FIG.2

**Description**

**BACKGROUND OF THE INVENTION**

The present invention relates to a device for measuring thermophysical properties in solid materials.

The invention relates, moreover, to a method for measuring thermophysical properties in solid materials.

More specifically, the inventive measurement device and experimental method would allow to determine, for a broad range of resilient solid materials, the following thermophysical properties and/or relationships therebetween: thermal diffusivity and conductivity, specific heat, thermal linear expanding coefficient, as well as the Grüneisen's parameter.

As is known, it would be at present very desirable to have as available a lot of improved measurement instruments or tools having a broad range of operating flexible features, as well as good reliability and repeatability features.

Moreover, it would be desirable to provide measurement instruments adapted to perform measurements on a very broad range of interesting physical parameters, at a comparatively low cost.

**SUMMARY OF THE INVENTION**

Accordingly, the aim of the present invention is to provide a device for measuring thermophysical properties in solid materials, which, while using a conventional type of pressing machine, is specifically adapted to extend the operating functions thereof even to a thermophysical characterization of a lot of solid materials.

Within the scope of the above mentioned aim, a main object of the present invention is to provide such a measurement technique or method, which, being based on a thermoelastic effect, is specifically adapted to operatively exploit the coupling between the temperature field and straining field occurring as a sample is subjected, under controlled thermal conditions, to a suitable mechanical stress cycle.

According to one aspect of the present invention, the above aim and objects, as well as yet other objects, which will become more apparent hereinafter, are achieved by a device for measuring thermophysical properties in solid materials, said device being associated with a pressing test apparatus adapted to subject the material to be measured to one or more mechanical stress cycles, characterized in that said device comprises centering means for centering said sample and adapted to provide in said sample a uniaxial and even effort status, supporting means adapted to restrain inside said sample temperature variations caused therein by a thermoelastic effect during a mechanical transient stress field, and that said device further comprises thermostatic means adapted to provide an even temperature distribution through said sample and a negligible thermal offset through the measurement region, and temperature sensing means, operatively associated with said sample, in order to exploit the thermomechanical relationships between the strain field and temperature field to determine, for each of the measurement samples, one or more thermophysical parameters and/or relationships between said thermophysical parameters.

The present invention relates, moreover, to a measurement method for measuring thermophysical properties in solid materials, characterized in that said method comprises the steps of: subjecting a sample of the material to be measured to one or more pressing and releasing mechanical stress cycles, to provide an efficient source of thermal power generated due to a thermoelastic effect; using said efficient thermal power source to determine one or more thermophysical parameters and/or relationships between said thermophysical parameters as associated with said sample.

The invention provides the following advantages with respect to the present status of the art.

At first, the device, which can be easily made and quickly assembled, provides an advantageous improvement in the material testing apparatus: in fact, by exploiting a conventional pressing apparatus, it allows to broaden the use range thereof to a thermophysical characterization of said materials, in addition to the conventional type of method.

The inventive technical solutions and methods provide a reliable and operatively flexible device, while allowing to obtain sufficiently accurate results and allowing a good repeatability of the measurements.

**BRIEF DESCRIPTION OF THE DRAWINGS**

Further advantages and characteristics of the present invention will become more apparent hereinafter from then following disclosure, given by way of an illustrative but not limitative example, with reference to the accompanying drawings, where:

Figure 1 is a schematic view of a pressing or compression test apparatus in which is applied the device according to the invention;

Figure 2 is a schematic view of the measurement device for carrying out thermophysical measurements in solid materials according to the present invention;

Figure 3a illustrates an electric diagram associated with a thermistor included in a first preferred embodiment of the device according to the invention;

Figure 3b illustrates a further electric diagram associated with a thermocouple, included in a second preferred embodiment of the device according to the invention; and

Figure 4 illustrates a diagram, given by way of a merely indicative example, of a typical temperature variation induced in a sample due to a thermoelastic effect.

## DESCRIPTION OF THE PREFERRED EMBODIMENTS

In the following disclosure, reference will be made to some preferred embodiments of the present invention, which have been illustrated, by way of a not limitative example, for clearly showing several possible variations of the invention.

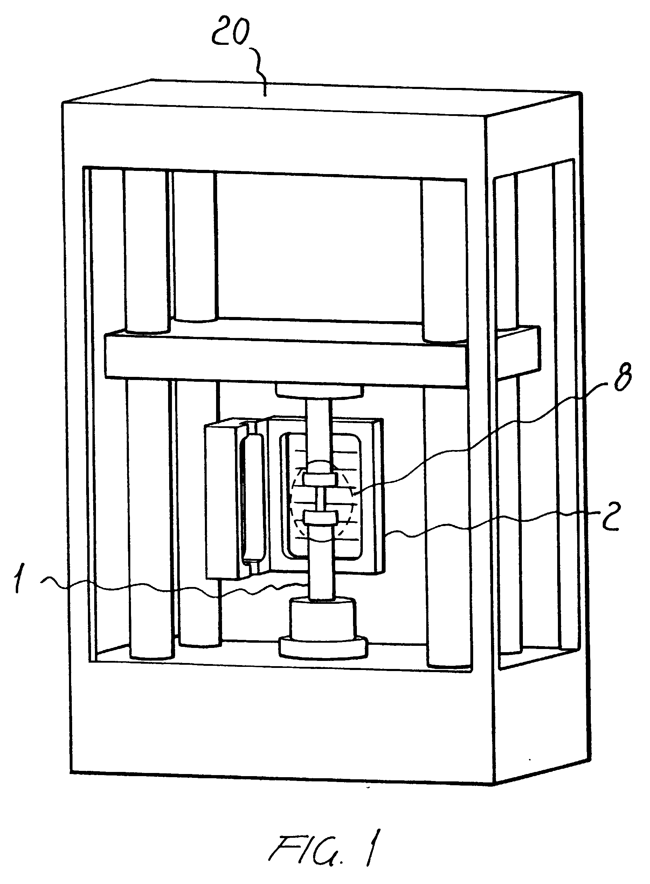

The measurement device according to the invention, which has been specifically designed for determining thermophysical properties of solid materials, includes a conventional pressing test apparatus, preferably adapted to operate under a controlled load and with a scale upper limit of at least 10 kN, which has been shown in Figure 1 and generally indicated by the reference number 20.

The apparatus 20 must meet the following geometrical, mechanical and operating requirements as provided by the enforcing standardizing rules (for example UNI 6686/01, ASTM E 209-65 or equivalent standards): in particular, the apparatus should comprise a suitable ball articulation 7, thereby providing an even force on the surface of the sample 3 being tested.

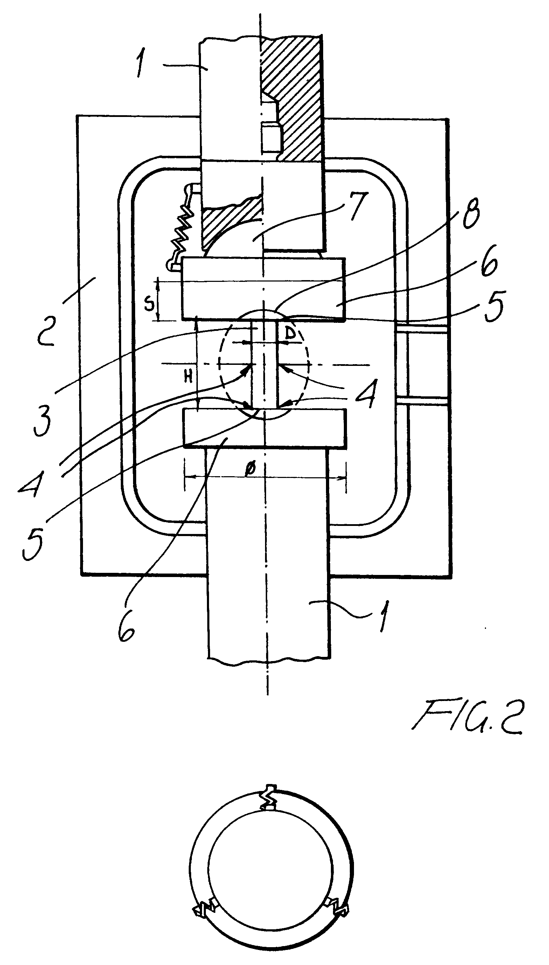

The experimental constructed apparatus has been schematically shown in Figure 2: in particular, the sample 3 is arranged between two suitable opposite plates 6, by properly centering said sample with respect to the axes of the apparatus 20 by using a suitably centering device (template, mask, or the like).

The above mentioned opposite plates 6 constitute an essential part of the measurement apparatus, and they are specifically designed to restrain in the inside of the sample 3 the temperature variations caused by the thermoelastic effect generated during the mechanical transient phenomenon.

More specifically, said opposite plates 6 comprise two cylindric plates, which has been properly ground, and having a diameter $\Phi$ corresponding at least to 5 times the diameter of the sample 3, and a thickness S of the order of several centimeters and provided with mechanical characteristics such as surface hardness, yield resistance, high temperature resistance adapted to prevent great stain and notching effects from occurring under a maximum load.

The contact surfaces of the sample 3, which have been preferably mirror-like polished, must have a good finishing degree and a planarity and parallelism tolerance not greater than 0.01% of the diameter $\Phi$ thereof.

The thermal properties of the materials forming said opposite plates 6 are moreover very important: in fact, in addition to the above mentioned mechanical features, they must have a ratio $\alpha/k$ of low value (this parameter controlling the amplitude of the thermoelastic effect, $\alpha$ indicating the linear thermal expanding coefficient and k the thermal conductivity) and a high thermal capability for unit of volume pc (where p is the volume mass and c the specific heat), thereby providing sufficient isothermal properties during the measurement operation, by operating as "heat tanks".

To that end, it should be pointed out that the steel materials conventionally used in testing apparatus (for example for making the punches 1 or the ball articulation 7) would not be suitable.

On the contrary, mainly at a high temperature, would be very suitable material including molybdenum, tungsten or silicon carbide, whereas, at middle temperatures, opposite plates 6 made of special copper alloys, such as the 102/W alloy including 0.8% of Cr of the 143/Z alloy including 0.7% of Cr and 0.1% of Zr) could also be used.

In order to provide accurate measurement results for a broad range of materials, it would be necessary that the geometry and surface finishing as well as the measurement sample 3 size be designed to meet set requirements.

In particular, the sample will have a cylindrical shape, preferably with a circular cross-section of diameter D, having ground surface flat and parallel bases with a tolerance of 0.02 mm to provide a suitable contact with the loading system.

In order to reduce as far as possible the effects of the thermal resistance $R_c$ at the interface region between the opposite plates 6 and the bases of the sample 3, it would be preferable to mirror like polish the contacting surfaces.

The use of a gap material, having the form of a thin sheet or film, would be particularly useful for achieving accurate results in determining interesting thermophysical properties.

To that end it would be possible to use different gap or interstice materials (for example indium, gold, silver, lead, tin, copper, aluminium, cadmium, siliconebased fat materials), by previously performing a suitable calibration operation to different load values with certified thermal conductivity samples (see the relationship (8) thereinbelow illustrated.

The specific material and the thickness thereof will be suitably selected depending on the used opposite plates 6, on the properties of the material to be measured and the temperature at which the measurement is carried out.

The sample 3 to be used in the measurement or test must have simple but essential size requirements.

In this connection it should be pointed out that the optimum heigh H will be determined so that the time constant $\tau_c$ which would be a characteristic of the thermal relaxation would meet the two following conditions:

$$\tau_c > 10.\tau_s \qquad (1)$$

$$\tau_c > t_o > \tau_s \qquad (2)$$

in which $\tau_s$ is the response time for the device used for measuring the temperature and $t_o$ is the duration of the mechanical transient phenomenon.

In this connection it should be further pointed out that the theoretical value of $\tau_c$ would be determined according to the relationship (5) thereinbelow indicated; however, $\tau_c$ can be suitably determined as $\tau_c = H^2/\pi^2\chi$, (where $\chi$ indicates the thermal diffusivity $\chi = k/pc$).

The relationship (1) will assure that, during the thermal transient phenomenon, the temperature signal detected on the sample will not be affected by a comparatively large delay and strain; the relationship (2), in turn, will allow to maximize the amplitude $\Delta T_{max}$ of the temperature range, thereby causing it to approximate as far as possible adiabatic conditions during the sample loading and unloading steps.

The diameter D and ratio H/D must be so designed as to provide an even and uniaxial strain status as well as an exclusively longitudinal temperature distribution through the sample.

Diameters from 5 to 10 mm have been found as suitable to provide, by a pressing machine calibrated at 10 kN, a maximum strain or effort lower than the yield resistance of the material being tested, thereby fully exploiting the thermoelastic effect; on the contrary, samples 3 having diameters larger than the mentioned values, would require to use a pressing apparatus having a larger loading capability.

Ratios H/D varying from 3 to 5 are considered as preferred, but it would be also possible to use with success values of H/D up to 10, provided that any elastic instability conditions are prevented from occurring.

The test must be performed, under controlled thermal conditions, by arranging the sample 3, the opposite plates 6, the possibly used ball articulation 7 and punches of the pressing machine 20 within a suitable environmental chamber 2, as schematically shown in Figures 1 and 2.

The environmental chamber 2, in turn, comprises a commercial type of oven or cryostatic device adapted to operate within the desired temperature range, while providing a suitable stability at least for the comparatively short time required by the test or, for room temperature measurements, said chamber 2 will comprise a simple thermal protection cylindric guide assembly (for example made of an aluminium material) of suitable thickness.

Said chamber 2 must be designed so as to meet two main requirements, that is:

    1) a thermal gradient in the measurement region sufficiently small to provide a homogeneous or even temperature distribution through the sample 3;

    2) a thermal offset, under a steady operating condition, which is negligible with respect to the temperature variations induced through the sample 3 because of the thermoelastic effect and, in each case, such as to be properly accounted for in the measurement data processing step.

The mentioned chamber 2, as suitably sized, must be further provided with suitable ports for engaging therein the measurement and control instruments, as well as the testing apparatus punches 1.

The possibility of an under-vacuum operation, as well as the provision of an efficient thermal insulation of the side surface of the sample 3, would allow to greatly reduce the convection heat losses, which would be particularly useful in high temperature measurements.

For monitoring the thermal transient phenomenon during the test, it would be necessary to use temperature sensors 4 (such as thermistors or thermocouples, depending on the operating temperature) having suitable sensibility, responsivity and resolution properties. In particular, since the expected temperature variations would be small ($\Delta T_{max} \approx 10^{-1}$K), then the used sensors 4 must have a high resolution, of the order of mK.

The response time $\tau_s$ of said sensors, moreover, must be sufficiently short as to meet the above mentioned relationships (1) and (2).

In this connection it should be pointed out that the thermal contact properties could have a very great importance, since the responsiveness would depend not only on the intrinsic characteristics of the specific used sensor 4, but also on its assembling conditions.

For performing routine tests, it will be sufficient to exploit the signal detected at a single measurement point on the middle line of the sample 3; however, to properly evaluate the efficiency of quality degree of the obtained results, it would be preferable to use the general configuration shown in Figure 2: in this arrangement, two temperature sensors 4 are located at diametrically opposite positions at a half of the height of the sample 3, whereas other two sensors 4 are arranged on one of the opposite plates 6.

With the above disclosed arrangement, it would be possible not only to detect the evolvement of the temperature of the tested material, useful for defining the thermophysical characteristics thereof, but also to evaluate the cross homogeneity of the temperature field in the same as well as the isothermic properties of the used opposite plates, which conditions would be essential for a good performance of the measurement.

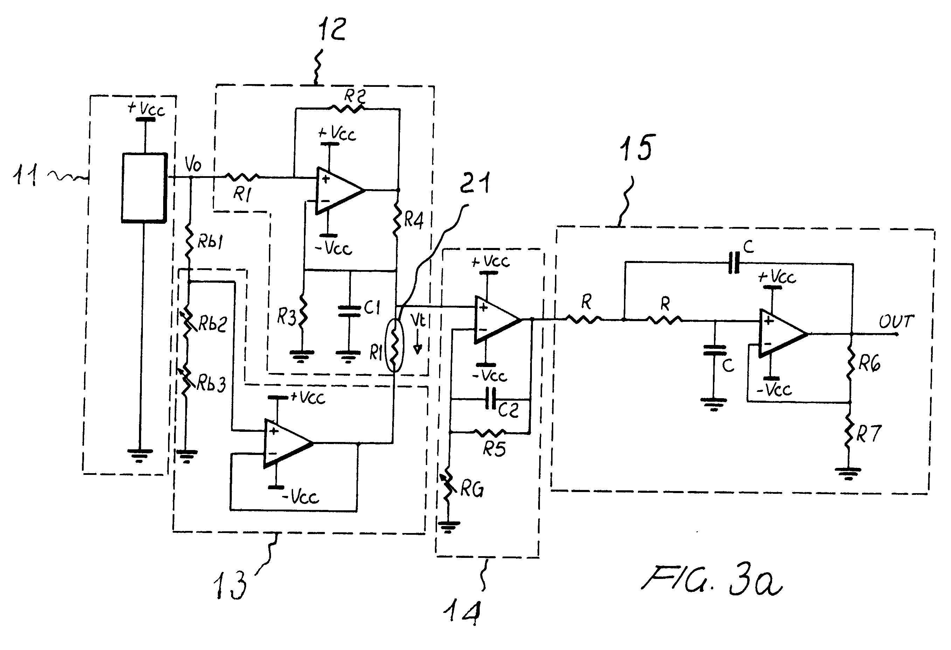

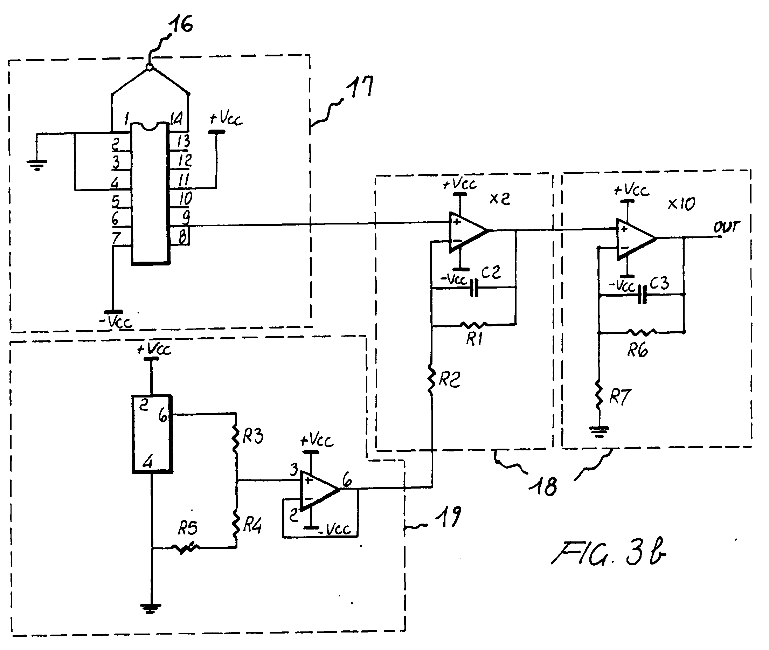

The signals coming from the load cell and the temperature sensors 4 (in this connection see the electric diagram of Figures 3a and 3b shown as a non limitative example and respectively related to the use of a thermistor 21 and a thermocouple 16) can be controlled by a conventional controlling system having a suitable sampling frequency (typically of the order of some tens of Hertz), and the operator could usefully use furthermore a display device for displaying the test in real time (a computer, oscilloscope or the like).

More specifically, the circuit shown in Figure 3a comprises a voltage reference 11, a current source 12, associated with the thermistor 21, and a balancing circuit 13. Moreover, the signal coming from the thermistor 21 is amplified by an amplifier 14 and processed by a Butterworth low-pass filter 15.

The circuit of Figure 3b comprises a monolithic amplifier 17, with cold-joint compensation means, a balancing circuit 19 as well as an amplifier pair 18.

The reliability of the measurement device should be periodically monitored by an accurate monitoring of the pressing apparatus 20, of the environmental room 2 as well as of the used temperature sensors 4.

The monitoring of the load system can be performed according to standard calibrating procedures; for the temperature sensors 4, on the contrary, it would be preferable to use a dedicated individual calibrating method in order to perform a proper comparing with respective reference samples: in fact, rarely the nominal calibrating curves supplied by the maker would be sufficiently accurate for measuring the thermal transient phenomenon induced in the sample 3 because of the thermoelastic effect ($\Delta T_{max}$ = 0.05 ÷ 0.15 K).

The method for measuring thermophysical properties in solid materials according to the invention will be thereinbelow disclosed in a detailed manner.

After having verified the proper operation of the chamber 2, it is possible to perform the test: to that end, the sample 3 is located in the measurement device, as shown in Figure 2, by properly centering it with respect to the axis of the apparatus 20, and by properly coupling it with the counter-plates 6 and the temperature sensors 4; then, the measurement region is brought to the desired temperature $T_o$, and, under equilibrium condition, it is performed a starting preloading operating cycle, in order to compensate for possible clearances of the apparatus 20 for assuring a proper contact of the ball articulation 7 and of the interstice films 6 with the basis of the sample 3.

Thus, it is possible to start the measurement. A constant $d\sigma/dt$ ($\sigma$ being the uniaxial pressing force) uniaxial pressing operation is performed for a time $t_o$, to achieve an effort or force status $\sigma_{ril}$ less than the yielding resistance of the material: the sample 3, after heating due to the thermoelastic effect, will tend to return to the equilibrium temperature $T_o$, while longitudinally exchanging the produced heat with the two opposite plates 6 assembled in the experimental device.

After the thermal transient phenomenon. the process can be reversed by fully or partially unloading the sample 3, at a constant speed or rate: in this case, the sample 3 will be cooled, and then brought again to the temperature $T_o$, with a rate controlled by the thermal diffusivity $\chi$ thereof.

For a success of the measurement, the following operating parameters must be properly selected:

1) the applied force variation range $\Delta\sigma$ starting from a suitable preload to a value $\sigma_{ril}$ in each case less than the yielding resistance of the sample 3 and related opposite plates 6;

2) the corresponding duration $t_o$ of the mechanical transient phenomenon, which must be selected to meet the above mentioned relationships (1) and (2).

The above mentioned parameters will uniquely define the slope $d\sigma/dt$ of the sample 3 pressing and/ releasing ramp.

This slope will control the thermal power for unit of volume $q_{el}$, as produced due to the thermoelastic effect (see the relationship (9) thereinbelow illustrated), and it must be optimized, for a given material, by considering that excessively high values of $d\sigma/dt$ would negatively affect the stability of the loading chain as well as the isothermic properties of the opposite plates 6, whereas excessively low values of $d\sigma/dt$ would involve excessively low temperature variations.

During the test it is preferable to operate with different loading and unloading cycles of the sample 3, possibly with different preloading values, and different $\Delta\sigma$, $\sigma_{ril}$, $t_o$, and $d\sigma/dt$ values, thereby optimizing the measurement and properly evaluating the effect of the individual parameters in defining the interesting thermophysical properties.

In this connection, for example, it should be pointed out that the evolvement of the temperature of the sample 3, during the thermal relaxation step, will be affected by the contact resistance $R_c$, and the latter, up to values of the order of 100 MPa will remarkably depend on the effort $\sigma_{ril}$.

With respect to the data processing method, it should be pointed out that: the temperature measured along the middle line of the sample 3 will depend on the environment offset phenomena, and on the variations, even if very small, of the temperature of the opposite plates 6, caused by the deformation of said opposite plates under variable loading condition; accordingly, to assume a constant or even value of the equilibrium temperature $T_o$ would not be strictly verified during the overall test.

In order to minimize as far as possible such an effect, one should use samples 3 having a small time contact $\tau_c$, preferably from 5 to 10 seconds, thereby, during the individual relaxation, it would be possible to have very small offset effects $T_o(t)$, which can be compensated for by a suitable data processing procedure.

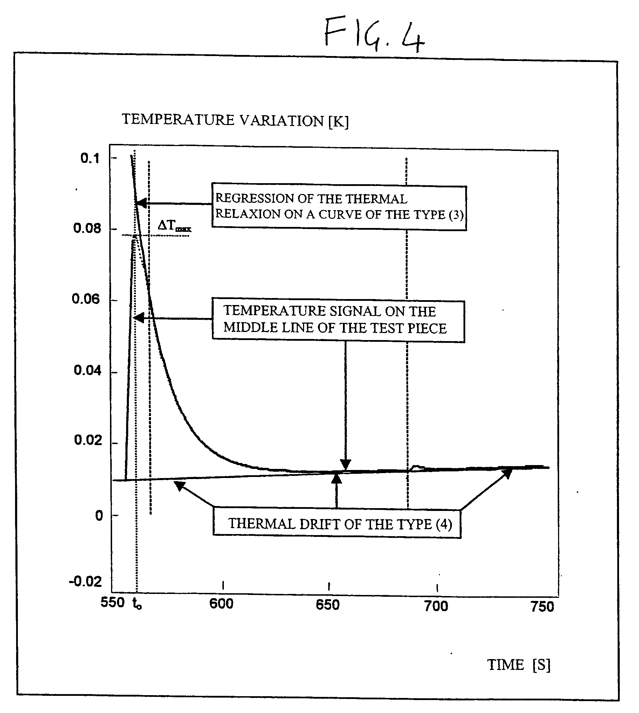

Figure 4 illustrates, by way of an indicative example, a typical temperature variation as induced in a sample by the thermoelastic effect. The signal measured at a half height of the sample 3, due to the adopted experimental solutions, will be scarcely affected by the environment offset effects; it can be represented with a good accuracy by the following function:

$$\Delta T\left(\frac{H}{2}\right) \equiv T\left(\frac{H}{2}, t\right) - T_0(t) = \Delta T_{max}\left(\frac{H}{2}\right) \cdot e^{-(t-t_0)/\tau_c}, \quad (3)$$

by following the drift during the thermal relaxation with an optimum approximation of a linear type of evolvement, which can be expressed as

$$T_0(t) \cong T_0(t_0) + \left(\frac{dT}{dt}\right)_0 \cdot (t-t_0). \quad (4)$$

By a simple calculation routine procedure, it will be very possible to define the time interval providing the best correlation of the thermal drift and of the two parameters $\Delta T_{max}$ and $\tau_c$ to be used for characterizing the material being tested.

In particular, by indicating with E the Young's module and with the Poisson ratio, the following relationships will be valid:

$$\chi = \frac{1}{\beta_1^2 \cdot \tau_c} \quad (5)$$

and

$$\frac{\alpha}{\rho \cdot c} = \gamma \cdot \frac{(1-2v)}{E} = \frac{\Delta T_{max}(H/2)}{T_0 \cdot \Delta T^*} \cdot \frac{1}{\tau_c \cdot d\sigma/dt}, \quad (6)$$

in which β is the solution in (O, π/H) of the transcendental equation

$$\beta \cdot tg\left(\frac{\beta \cdot H}{2}\right) = \frac{1}{k \cdot R_c} \quad (7)$$

and in which

$$\Delta T^* \equiv \frac{1 - e^{-t_0/\tau_c}}{\frac{\beta^*}{2sen\beta^*} + \frac{cos\beta^*}{2}} \quad \text{and} \quad \beta^* \equiv \frac{\beta_1 \cdot H}{2}.$$

For a first evaluation of the interesting thermophysical properties, it is possible to disregard the thermal contact resistance effect: in this case we will have $\beta_1 = \pi/H$, and, accordingly the relationships (5) and (6) will directly provide the values of χ, α/c and of the Grüneisen's parameter, $\gamma = \alpha E/(1 - 2v)pc$, upon knowing the height of the sample 3, the load application rate and the volume mass and, for the Grüneisen's parameters, the Poisson's ratio v and the Young's module E of the material.

More accurate results can be obtained by also considering, by using the Equation (7) the contact resistance $R_c$: the latter can be evaluated, upon calibrating by set thermal conductivity samples and possibly by interstice material at the sample-opposite plate interface, by using a relationship of the type:

$$R_c(\sigma) = R_0 \cdot \left(\frac{\sigma}{\sigma_0}\right)^{-n} \quad (8)$$

in which, upon having selected a reference effort $\sigma_o$, $R_o$ and n, will be the coefficients of the above mentioned calibration, whereas $\sigma = \sigma_{ril}$ will represent the effort or strain status at the mentioned interface during the thermal relaxation step.

Finally, it should be pointed out that, if the mechanical transient phenomenon evolves in a sufficiently short time to assure a proper heating and cooling of the sample 3 under substantially adiabatic conditions ($t_0 \ll \tau_c$), then the temperature of the sample 3 will meet, with a good approximation, the equation

$$\rho \cdot c \frac{dT}{dt} = q_{el}, \quad (9)$$

in which the "efficient source" describing the thermoelastic effect can be equivalently expressed as

$$q_{el} = \alpha \cdot T_0 \cdot \frac{d\sigma}{dt} = \gamma \cdot \rho \cdot c \cdot (1-2v) \cdot T_0 \frac{d\varepsilon}{dt} \quad (10)$$

where $\varepsilon = \sigma/E$ is the longitudinal deformation or strain of the sample.

Accordingly, the values of the ratio α/c and the Grüneisen's parameter γ can be determined alternately from the time evolvement of the temperature and load as recorded during the starting heating and/or cooling step of the sample.

By concluding, the execution mode and procedure of the test, jointly with the data processing procedure, will be of a fundamental importance in order to use with success the subject method and device for measuring and characterizing the thermophysical properties of materials.

In particular, for a good repeatability, accuracy and precision of the results, different operating parameters must be properly considered, jointly with some main components of the testing apparatus, said parameters and components being hereinbelow briefly resumed:

- the ball articulation 7 and/or the sample 3 centering devices in order to provide an homogeneous "efficient thermoelastic source" $q_{el}$;

- the opposite plates 6 of properly selected configurations and materials, in order to provide limit conditions as isothermic as possible ($T_0 \cong$ constant);

- suitable geometry and processing of the samples 3 (height H, diameter D and aspect ratio H/D, tolerance of parallelism and planarity, surface finishing quality);

- interstice films 5 having suitable thickness and made of suitable materials in order to reduce and/or control the thermal contact resistance $R_c$, at the interface between the sample 3 and the opposite plates 6;

- an environmental chamber 2 having such a characteristic as to assure an homogeneous distribution of the temperature through the sample 3 and a negligible or very reduced thermal drift $T_0(t)$ in the measurement region 8;

- temperature sensors 4 having very good sensibility, responsiveness and resolution characteristics, which should be individually calibrated and accurately assembled in a desired measurement configuration, to allow the response times $\tau_s$ to meet the above mentioned relationships (1) and (2);

- a rate and load range which is properly calibrated (a suitable selection of the preload, as well as of $\Delta\sigma$, $\sigma_{ril}$, $t_0$ and $d\sigma/dt$).

The above mentioned technical solutions and operating conditions will provide the subject measurement method with very good reliability and flexibility operating characteristics, thereby allowing it to characterize a broad range of materials in a very simple, quick and complete manner.

The experimental device will assure a good repeatability of the measurements, and will provide sufficiently accurate results, owing to the specific thermal power source which is used therein and owing to the accurate measurement of the temperature variations derived from the thermoelastic effect.

Finally, another parameter of great importance will be constituted by the facility of selecting reference elements for the used experimental procedure: actually, measurements suitably performed on certified reference samples would allow to easily found the most critic parameters for the measurement as well as possible systematic errors, the latter, as properly evaluated, being considered in the calculations by a suitable data processing and/or calibration of the device (see, for example, the observations made with respect to the thermal drift and contact resistance), thereby allowing to improve the accuracy degree of the results and allowing to provide highly precise measurements, which can be compared with those of conventional measurement methods.

**Claims**

1. A device for measuring thermophysical properties in solid materials, said device being associated with a pressing test apparatus adapted to subject a sample of a material to be measured to one or more mechanical stress cycles, characterized in that said device comprises centering means for centering said sample to provide through said sample a uniaxial and even effort status, supporting means for confining within said sample temperature variations induced therein by a thermoelastic effect during a mechanical transient phenomenon, and that said device further comprises both thermostatic means for providing a homogeneous temperature distribution through said sample and a negligible thermal drift in the measurement region, and temperature sensing means, operatively associated with said sample, in order to properly exploit the thermomechanical relationships between the strain field and the temperature field to determine, for each said sample being measured, one or more thermophysical parameters and/or relationships between said thermophysical parameters.

2. A device for measuring thermophysical properties in solid materials, according to Claim 1, characterized in that said device comprises a ball articulation adapted to cooperate with said centering means in order to provide a uniaxial and even effort or strain status through said sample.

3. A device for measuring thermophysical properties in solid materials, according to Claim 1 or 2, characterized in that said sample supporting means comprise a pair of opposite plates each of which includes a cylindric ground plate having a diameter at least equal to three times the diameter of said sample.

4. A device for measuring thermophysical properties in solid materials, according to Claim 3, characterized in that said opposite plates have a low value of the ratio $\alpha/k$ of the linear thermal expanding coefficient and thermal conductivity, and a high thermal capability for unit of volume pc, thereby said opposite plates will remain sufficiently isothermic during the measurement.

5. A device for measuring thermophysical properties in solid materials, according to Claim 3 or 4, characterized in that said opposite plates are made of materials based on molybdenum, tungsten or silicon carbide or special copper alloys, such as the alloy 102/W including 0.8% Cr or the alloy 143/Z including 0.7% Cr and 0.1% Zr.

**6.** A device for measuring thermophysical properties in solid materials, according to one or more of the preceding claims, characterized in that said thermostatic means comprise an environmental chamber comprising an oven or a cryostatic device, said chamber being provided with throughgoing ports for engaging therein a measurement and control instrument assembly, as well as the punches of the test apparatus.

**7.** A device for measuring thermophysical properties in solid materials, according to one or more of the preceding claims, characterized in that said temperature sensing means comprise at least a thermistor or at least a thermocouple.

**8.** A device for measuring thermophysical properties in solid materials, according to Claim 7, characterized in that said temperature sensing means comprise thermistors or thermocouples, two of which are arranged at diametrically opposite positions at a half height of the sample, other two sensors being arranged on one of said two opposite plates.

**9.** A device for measuring thermophysical properties in solid materials, according to one or more of the preceding claims, characterized in that said device comprises an interstice material, in the form of a thin sheet or film, arranged in the interfaces included between the sample and opposite plates, to reduce and/or control the thermal contact resistance, $R_c$, at said interfaces.

**10.** A device for measuring thermophysical properties in solid materials, according to Claim 9, characterized in that said interstice material is selected from indium, gold, silver, lead, tin, copper, aluminium, cadmium or silicone based fat materials.

**11.** A device for measuring thermophysical properties in solid materials, according to Claim 9 or 10, characterized in that said interstice material is selected by a calibration to different load values by using thermal conductivity certified samples and by using a relationship of the type:

$$R_c(\sigma) = R_0 \cdot \left(\frac{\sigma}{\sigma_0}\right)^{-n}$$

in which, upon selecting a reference or preset effort $\sigma_0$, $R_0$ and n are the coefficient of said calibration, whereas $\sigma = \sigma_{ril}$ is the effort or strain status at the interface during the thermal relaxation step.

**12.** A method for measuring thermophysical properties in solid materials, characterized in that said method comprises the following steps of: subjecting a sample of the material to be measured to one or more mechanical compressing and releasing stress cycles, to provide an efficient thermal power source generated by a thermoelastic effect; using said efficient thermal power source to determine one or more thermophysical parameters and/or relationships between said thermophysical parameters associated with said sample.

**13.** A method for measuring thermophysical properties in solid materials, according to Claim 12, characterized in that said mechanical stress cycles are performed by using set values of preload, $\Delta\sigma$, $\sigma_{ril}$, $t_o$, and $d\sigma/dt$ and comprising the following steps of: pressing uniaxially the sample with a constant $d\sigma/dt$ for a time $t_o$, to achieve an effort or strain status $\sigma_{ril}$ less than the material yielding resistance, achieving the equilibrium temperature $T_o$ in said sample heated by said thermoelastic effect, unloading or relaxating the sample, either completely or partially, with a constant $d\sigma/dt$, to achieve in said sample said equilibrium temperature $T_o$ evaluating the effect of the individual parameters in determining the interesting or target thermophysical properties.

**14.** A method for measuring thermophysical properties in solid materials, according to Claim 12 or 13, characterized in that the step of determining said thermophysical parameters comprising a step of detecting the temperature variations, as measured on a central line of said sample, during said thermal relaxation steps.

**15.** A method for measuring thermophysical properties in solid materials, according to Claim 4, characterized in that the detection of said temperature variation is performed by considering the effect of the contact resistance $R_c$.

**16.** A method for measuring thermophysical properties in solid materials, according to one or more of Claims 12 to 15, characterized in that said method provides for the use of samples having a time constant $\tau_c$ less than 30 seconds, thereby, during the individual relaxation, the effects of said thermal drift $T_o(t)$ are small and can be simply considered by a suitable data processing procedure.

**17.** A method for measuring thermophysical properties in solid materials, according to one or more of Claims 12 to 16, characterized in that said method provides for the use of samples having a diameter D and an aspect ratio H/D allowing a temperature distribution as longitudinal as possible and an even and uniaxial strain status in the sample to be obtained.

**18.** A method for measuring thermophysical properties in solid materials, according to one or more of the preceding claims 12 to 17, characterized in that said method comprises a mechanical transient phenomenon made in a sufficiently short time to assure a heating and cooling of said sample under substantially adiabatic condition, thereby to determine the value of the thermal expansion and/or of the Grüneisen's parameter.

**19.** A method for measuring thermophysical properties in solid materials, according to one or more of claims 12 to 18, characterized in that said method comprises the further step of performing further measurements on certified reference samples in order to evaluate the most critic factors with respect to said measurement and possible systematic errors.

**20.** A method for measuring thermophysical properties in solid materials, according to one or more of Claims 12 to 19, characterized in that said measurable thermophysical parameters comprise: thermal diffusivity and conductivity, specific heat, linear thermal expanding coefficient, Grüneisen's parameter and the relationships between said parameters.

FIG. 1

FIG. 2

FIG. 3a

FIG. 3b

# FIG. 4

TEMPERATURE VARIATION [K]

REGRESSION OF THE THERMAL RELAXION ON A CURVE OF THE TYPE (3)

$\Delta T_{max}$

TEMPERATURE SIGNAL ON THE MIDDLE LINE OF THE TEST PIECE

THERMAL DRIFT OF THE TYPE (4)

TIME [S]